# EUROPÄISCHE PATENTSCHRIFT

(11) **EP 0 659 529 B1**
(45) Veröffentlichungstag und Bekanntmachung des Hinweises auf die Patenterteilung: **11.03.1998**
(21) Anmeldenummer: 94119514.1
(22) Anmeldetag: 09.12.1994
(51) Int. Cl.: B29C 33/62

(54) **Aussentrennmittel**
External release agent
Agent de démoulage

(30) Priorität: 22.12.1993 DE 4343818
(43) Veröffentlichungstag der Anmeldung: 28.06.1995
(73) Patentinhaber: Rhein Chemie Rheinau GmbH, 68219 Mannheim (DE)
(72) Erfinder: Wagner, Herbert, D-69669 Bad Schönborn (DE)
(74) Vertreter: Gremm, Joachim, Dr.

(56) Entgegenhaltungen:
- EP-A- 0 517 155
- FR-A- 2 332 319
- DATABASE WPI Section Ch, Week 9212, Derwent Publications Ltd., London, GB; Class AGH, AN 92-093063 & JP-A-4 036 390 (ORIENTAL SANGYO K.K.) 6. Februar 1992

## Beschreibung

Bei der Formung und Vulkanisation von Luftreifen, z.B. für Kraftfahrzeuge, verteilt man auf der Oberfläche der Reifenrohlinge eine Lösung die nach Antrocknen einen Film bildet, durch den das Anbacken der Reifen an der Vulkanisationsform verhindert wird. Für Luftreifen unterscheidet man Außentrennmittel und Innentrennmittel; Außentrennmittel werden auf die Außenseite des Reifenrohlings aufgebracht - Innentrennmittel auf die Innenseite. Man braucht zwei verschiedene Trennmittel, weil die Außenseite von Luftreifen und die Innenseite aus chemisch verschiedenen Materialien bestehen.

Aus der deutschen Patentanmeldung DE-A-2 552 283 ist die Verwendung von Acyltauriden als Trennmittel, die auf Walzen und Formen aufgebracht werden, um das Ankleben von Kautschukfellen zu verhindern, bekannt.

In der japanischen Patentanmeldung JP-A- 4 036 390 in Form des Abstracts (Database WPI, Section Ch, Week 9212, Derwent Publications Ltd. London, GB; Class AGH AN 92-093063) ist die Anwendung von festen, wachsähnlichen Pulvern als Trennmittel in Formen beim Druckguß von Aluminium beschrieben.

Die vorliegende Erfindung betrifft ein wäßriges Außentrennmittel. Es ist primär für die Herstellung von Luftreifen für Kraftfahrzeuge gedacht, kann aber auch bei der Herstellung anderer Gummiartikel (besonders solcher, die aus ähnlichen Kautschuken wie die Außenseite von Luftreifen bestehen) benutzt werden.

So hergestellte Kautschukvulkanisate, vorzugsweise gefüllt mit Kieselsäure anstatt Ruß, zeigen teilweise verbesserte elektrische Leitfähigkeit bzw. verminderte elektrostatische Aufladungen.

Wäßrige Außentrennmittel sind im prinzip bekannt. So lehrt die europäische Patentanmeldung 517 155 ein wäßriges Außentrennmittel, z.B. für die Herstellung von Luftreifen, das
5 bis 35 Gew.-% Diatomeenerde (oder bestimmte andere Kieselsäuren)
0,5 bis 6 Gew.-% pyrogene hydrophobe Kieselsäure
0,1 bis 2 Gew.-% nicht-ionisches Tensid
0,2 bis 3 Gew.-% bestimmter Bindemittel, nämlich entweder Carboxylreste (oder deren Salze oder Ester) enthaltende synthetische Polymere oder bestimmte natürliche Stoffe nämlich Casein, Albumin oder Zellulose
0,1 bis 3 Gew.-% Farbstoff
0 bis 5 Gew.-% Ethylalkohol und
45 bis 90 Gew.-% Wasser enthält.

Es handelt sich also im Prinzip um eine Dispersion verschiedener Kieselsäuren in Wasser, die durch ein Tensid stabilisiert ist und die als synthetisches Bindemittel ein wasserlösliches Carboxylgruppen enthaltendes Polymerisat enthält, das offenbar zur Filmbildung befähigt ist.

Es kommt offensichtlich in EPA 517 155 entscheidend auf die Kombination Kieselsäure + pyrogene Kieselsäure + Carboxylgruppen enthaltendes Bindemittel an.

Nach den Angaben der europäischen Patentanmeldung 517 155 ist das dort vorgeschlagene Außentrennmittel umweltfreundlich und bereits in sehr geringen Mengen ausreichend wirksam.

Bei allen diesen Vorzügen haftet dem Außentrennmittel der Nachteil an, daß es zu Verfärbungen an den ausgeformten Luftreifen (oder anderen Formkörpern) Anlaß gibt. Dies ist bei hochwertigen Kraftfahrzeugreifen - deren Herstellung ist das Hauptanwendungsgebiet von Außentrennmitteln - besonders störend. Selbst wenn es gelingt den Reifenrohling vor der Vulkanisation vollständig gleichmäßig mit dem Trennmittel zu besprühen und ein völlig gleichmäßig benetztes Vulkanisat zu erzeugen, treten Verfärbungen dort auf, wo überstehende Teile, z.B. Angüsse, nachträglich entfernt werden müssen.

Das erfindungsgemäße Außentrennmittel vermeidet diese Nachteile. Es enthält
**I Helle Pigmente:**
   - 10 bis 60 Gew.-%: bevorzugt 15 bis 25 Gew.-%
   amorphes Kieselgelpulver mit ca. 65 Gew.-% Kristallwasser mit einem mittleren Teilchendurchmesser von ca. 3-50 µm, vorzugsweise 20 µm
   - 0,1 bis 1,5 Gew.-%: bevorzugt 0,2 bis 0,5 Gew.-%
   pyrogene Kieselsäure mit einem mittleren Teilchendurchmesser von ca. 12 nm
   - 0,2 bis 2,0 Gew.-% bevorzugt 0,5 bis 1,5 Gew.-%: Polypropylenwachs, bevorzugt mikronisiert; mittlerer Teilchendurchmesser 10 bis 20 µm
**II Farbpigmente:**
   - 1 bis 5 Gew.-%: bevorzugt 1 bis 3 Gew.-% Farbruß
   - 1 bis 8 Gew.-%: bevorzugt 2-4 Gew.-% Eisenoxid schwarz mikronisiert
**III Bindemittel**
   - 0,3 bis 3 Gew.-%: bevorzugt 1 bis 2 Gew.-% Fettsäuremethyltaurid, Na-Salz
   oder
   - 0,5 bis 6 Gew.-%: bevorzugt 1 bis 3 Gew.-% wäßrige Polyethylendispersion
**IV Tenside**
   - 0 bis 0,4 Gew.-%: bevorzugt 0,1 bis 0,3 Gew.-% nichtionisches Tensid
**V Trägerflüssigkeit**
   - 55 bis 75 Gew.-% ,: bevorzugt 60 bis 66 Gew.-% Wasser
   - 0,5 bis 5 Gew.-%: Isopropanol
   - 0 bis 5 Gew.-%: Entschäumer
   - 0,1 bis 0,3 Gew.-%: Dispergiermittel
   - 0,05 bis 0,1 Gew.-%: Verdicker
   - 0,01 bis 0,05 Gew.-%: Biocid

Der prinzipielle Unterschied zu dem Außentrennmittel der europäischen Patentanmeldung 517 155 ist somit der Ersatz des Carboxylgruppen enthaltenden Polymerisats durch Fettsäuremethyltauridsalz und/oder ein Polyethylen- und/oder Polypropylenwachs in Kombination mit der Verwendung bestimmter Kieselgele und Farbpigmente.

Die wäßrigen Außentrennmittel des Standes der Technik, die Diatomeenerde oder andere wasserfreie Kieselsäuren (gefällten oder pyrogenen) und Ruß als Füllstoffe enthalten, haben den Nachteil, daß die vulkanisierten Reifen bei ungleichmäßigem Sprühen oder bei zuviel Sprühen grau und fleckig werden.

Durch den Einsatz der amorphes Kieselgelpulver (mit ca. 65 % Kristallwasser) enthaltenden Rezeptur wird die Graufärbung vermieden, die Vulkanisation aber nicht gestört.

Die Herstellung des Außentrennmittels und seine Anwendung folgen den in der europäischen Patentanmeldung 517 155 angegebenen Regeln. Auf die Lehre dieser Schrift wird hier - um Wiederholungen zu vermeiden - ausdrücklich Bezug genommen.

Im folgenden wird dennoch eine kurze Darstellung des Herstellungsverfahrens für das Außentrennmittel und seine Anwendung gegeben:

### Ausführungsbeispiel

### Bestandteile:

- 62 Gew.-Teile: Wasser
- 0,05 Gew.-Teile: Kelzan D (Polysaccharidverdicker)
- 0,23 Gew.-Teile: Rewopal LA 6 Tensid nichtionisch
- 0,06 Gew.-Teile: Foammaster 306 (Fettsäurepolyglykolether)
- 0,13 Gew.-Teile: Sojalecithin W 250
- 1,00 Gew.-Teile: Polypropylenpulver
- 4,00 Gew.-Teile: Fettsäuremethyltaurid Na-Salz 30 %ig
- 23,00 Gew.-Teile: Kieselgelpulver 65 % H₂O Krist.
- 0,50 Gew.-Teile: Aerosil 200 (Kieselsäure, Pyrogen)
- 2,00 Gew.-Teile: Pigmosol schwarz 0058 (Ruß)
- 3,00 Gew.-Teile: Bayferrox 318 M (Eisenoxid)
- 4,00 Gew.-Teile: Isopropylalkohol
- 0,03 Gew.-Teile: Proxel GXL (Biocid)

### Herstellung des Außentrennmittels:

1. 1/2 Menge Wasser vorlegen.
2. Rewopal LA 6, Sojalecithin W 250, Foammasetr 306, Kelzan D zufügen und 5 Minuten rühren.
3. Hostapon CT-Teig zugeben. Rühren bis die Paste aufgeschlossen ist (ca. 15 Minuten).
4. Lanco Wax PP 1362 D zugeben. Rühren bis das Pulver aufgeschlossen ist (ca. 10 Minuten).
5. Daraclar 920, Aerosil 200, Pigmosol 0058, Bayferox 318 M und 1/4 der Menge Wasser zufügen und 10 Minuten rühren.
6. 1/4 der Menge Wasser (Rest), Isopropanol und Proxel GXL zufügen und 5 Minuten nachrühren.

Erhalten wird eine spülfähige wäßrige Emulsion.
Mit dieser Emulsion werden die Außenseiten von Reifenrohlingen vor der Vulkanisation eingesprüht. Die vulkanisierten Reifen zeigen keine Verfärbungen.

## Patentansprüche

1. Außentrennmittel enthaltend
**I Helle Pigmente:**
10 bis 60 Gew.-% amorphes Kieselgelpulver mit ca. 65 Gew.-% Kristallwasser mit einem mittleren Teilchendurchmesser von 3-50 µm
0,1 bis 1,5 Gew.-% pyrogene Kieselsäure mit einem mittleren Teilchendurchmesser von ca. 12 nm
0,2 bis 2,0 Gew.-% Polypropylenwachs, bevorzugt mikronisiert; mittlerer Teilchendurchmesser 10 bis 20 µm
**II Farbpigmente:**
1 bis 5 Gew.-% Farbruß
1 bis 8 Gew.-% Eisenoxid schwarz mikronisiert
**III Bindemittel**
0,3 bis 3 Gew.-% Fettsäuremethyltaurid, Na-Salz
oder
0,5 bis 6 Gew.-% wäßrige Polyethylendispersion
**IV Tenside**
0 bis 0,4 Gew.-% nichtionisches Tensid
**V Trägerflüssigkeit**
55 bis 75 Gew.-% , bevorzugt 60 bis 66 Gew.-% Wasser
0,5 bis 5 Gew.-% Isopropanol
0 bis 5 Gew.-% Entschäumer
0,1 bis 0,3 Gew.-% Dispergiermittel
0,05 bis 0,1 Gew.-% Verdicker
0,01 bis 0,05 Gew.-% Biocid.

## Claims

1. Outer-surface releasing agent containing
**I Light pigments :**
from 10 to 60 wt.% amorphous silica gel powder having approximately 65 wt.% water of crystallisation and an average particle diameter of 3 to 50 µm
from 0.1 to 1.5 wt.% pyrogenic silica having an average particle diameter of approximately 12 nm
from 0.2 to 2.0 wt.% polypropylene wax, preferably micronised; average particle diameter 10 to 20 µm
**II Coloured pigments:**
from 1 to 5 wt.% carbon black
from 1 to 8 wt.% black iron oxide, micronised
**III Binder**
from 0.3 to 3 wt.% fatty acid methyl tauride, sodium salt
or
from 0.5 to 6 wt.% aqueous polyethylene dispersion
**IV Surfactants**
from 0 to 0.4 wt.% nonionic surfactant
**V Carrier fluid**
from 55 to 75 wt.%,
preferably 60 to 66 wt.%, water
from 0.5 to 5 wt.% isopropanol
from 0 to 5 wt.% defoaming agent
from 0.1 to 0.3 wt.% dispersant
from 0.05 to 0.1 wt.% thickener
from 0.01 to 0.05 wt.% biocide.

## Revendications

1. Agent de démoulage externe contenant
**I des pigments clairs :**
10 à 60 % en poids d'un gel de silice amorphe en poudre à environ 65 % en poids d'eau de cristallisation, un diamètre de particule moyen 3 à 50 µm,
0,1 à 1,5 % en poids d'une silice pyrogène, diamètre de particule moyen environ 12 nm,
0,2 à 2,0 % en poids d'une cire de polypropylène, de préférence micronisée, diamètre de particule moyen 10 à 20 µm,
**II des pigments colorés :**
1 à 5 % en poids de noir de carbone,
1 à 8 % en poids d'oxyde de fer noir micronisé.
**III des liants :**
0,3 à 3 % en poids de methyltauride d'acide gras, sel de sodium,
ou bien
0,5 à 6 % en poids d'une dispersion aqueuse de polyéthylène.
**IV des agents tensioactifs :**
0 à 0,4 % en poids d'un agent tensioactif non ionique,
**V un liquide véhicule :**
55 à 75 % en poids, de préférence 60 à 66 % en poids d'eau,
0,5 à 5 % en poids d'isopropanol,
0 à 5 % en poids d'un agent anti-mousse,
0,1 à 0,3 % en poids d'un agent dispersant,
0,05 à 0,1 % en poids d'un agent épaississant,
0,01 à 0,05 % en poids d'un biocide.
